# EUROPEAN PATENT APPLICATION

(11) **EP 4 832 129 A1**
(43) Date of publication of application: **28.10.2026**
(21) Application number: 24908039.1
(22) Date of filing: 17.12.2024
(51) Int. Cl.: H01M 10/052, H01M 4/525, H01M 4/38, H01M 4/48, H01M 4/587, H01M 4/02

(54) **LITHIUM SECONDARY BATTERY**

(30) Priority: 18.12.2023 KR 20230185175
(71) Applicant: POSCO Holdings Inc., Pohang-si, Gyeongsangbuk-do 37859 (KR)
(72) Inventor: SONG, Jun-Hyuk, Pohang-si, Gyeongsangbuk-do 37859 (KR); YU, Byongyong, Pohang-si, Gyeongsangbuk-do 37859 (KR); NAM, Sang Cheol, Pohang-si, Gyeongsangbuk-do 37859 (KR); SONG, Junghoon, Pohang-si, Gyeongsangbuk-do 37859 (KR); LEE, Sanghyuk, Pohang-si, Gyeongsangbuk-do 37859 (KR)
(74) Representative: Pfenning, Meinig & Partner mbB
(86) International application number: PCT/KR2024/020547
(87) International publication number: WO 2025/135756

(57) **Abstract**

The present invention provides a lithium secondary battery including a positive electrode, a negative electrode, and an electrolyte, wherein the positive electrode includes a positive electrode active material layer, the positive electrode active material layer includes a positive electrode active material, the positive electrode active material includes a lithium metal oxide having a lithium-rich composition represented by Chemical Formula 1, the negative electrode includes a negative electrode active material layer, and the negative electrode active material layer includes a silicon-based negative electrode active material.

## Description

### [TECHNICAL FIELD]

The present invention relates to a lithium secondary battery.

### [BACKGROUND ART]

As the scope of use of lithium secondary batteries expands from small electronic devices to electric vehicles, power storage devices, and the like, demands for high energy density and excellent lifespan characteristics are increasing day by day.

However, in order to favorably implement both high energy density and excellent lifespan characteristics, first, energy density of the positive electrode and the negative electrode themselves should be excellent, and a combination between the positive electrode and the negative electrode should be appropriate, but there are various practical difficulties in this regard.

For example, when a silicon-based negative electrode, such as SiOₓ, Si/C, or Si, is used, the material itself can provide a high specific capacity, but actual energy density is very low and lifespan characteristics are also very poor due to relatively high initial irreversible capacity or active material degradation caused by limitations in negative electrode operating voltage. In order to compensate for such irreversible capacity characteristics or compensate for the negative electrode operating voltage, a sacrificial positive electrode material may be used in addition to a conventional positive electrode material; however, it is difficult to actually apply the same due to side reactions, gas generation, transition metal dissolution, and the like. In addition, in the case of a manganese-based lithium-rich layered positive electrode active material (Li₁₊ₓM₁₋ₓO₂), which is being studied as a next-generation positive electrode material, a high initial discharge capacity caused by an oxygen oxidation/reduction reaction during first charging and discharging can be provided. However, since a relatively low upper voltage is used from the second charging and discharging compared with the first charging and discharging, discharge capacity significantly drops to about 2/3 level, and therefore, when a graphite negative electrode is used, the energy density per volume consumed by the negative electrode in an actual cell is very large, and actual usable energy density is very low at a level of 450 Wh/L to 500 Wh/L.

In order to solve the imbalance in the combination between the positive electrode and the negative electrode, a lithium secondary battery system of a manganese-based layered lithium-rich oxide and a silicon-based negative electrode active material has recently been proposed. In this system, the high charge capacity of the positive electrode during first charging can be received by the high irreversible capacity portion of the silicon negative electrode, thereby making it possible to play a complementary role to some extent. However, in this system, the initial efficiency of the negative electrode is too high compared with the initial efficiency of the positive electrode, and thus a threshold capable of withstanding degradation of the silicon-based negative electrode active material becomes very low, thereby causing a problem in that only a very limited amount of the silicon-based negative electrode active material, within 5 wt% of the entire negative electrode active material, can be introduced. Such reduction in the input amount of the silicon-based negative electrode active material results in a reduction in energy density of the battery.

Accordingly, there remains a need for an optimal combination of positive electrode and negative electrode materials for simultaneously maximizing energy density and implementing excellent lifespan characteristics of a lithium secondary battery.

### [DETAILED DESCRIPTION OF THE INVENTION]

### [Technical Problem]

Accordingly, one object of the present invention is to provide a lithium secondary battery including a combination of a positive electrode and a negative electrode capable of simultaneously maximizing energy density and implementing excellent lifespan characteristics.

### [Technical Solution]

One embodiment of the present invention provides a lithium secondary battery including a positive electrode, a negative electrode, and an electrolyte, wherein the positive electrode includes a positive electrode active material layer, the positive electrode active material layer includes a positive electrode active material, the positive electrode active material includes a lithium metal oxide having a lithium-rich composition represented by the following Chemical Formula 1, the negative electrode includes a negative electrode active material layer, and the negative electrode active material layer includes a silicon-based negative electrode active material.

[Chemical Formula 1] Li₁₊ₓ(NiₐM1_{b}M2_{c})₁₋ₓO₂

In Chemical Formula 1, 0.02≤x≤0.1, 0.75≤a≤0.98, 0.02≤b≤0.25, 0≤c≤0.1, a+b+c=1, M1 is a buffer metal element and is Ti, Nb, W, Zr, V, Cr, Mo, Ta, or a combination thereof, and M2 is a doping element and may be Al, B, Y, Co, Mn, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof.

An absolute value of a difference in initial efficiency between the positive electrode and the negative electrode may be 3% or less.

The lithium metal oxide may have a ratio of a peak intensity of a (003) plane to a peak intensity of a (104) plane (I(003)/I(104)) of 0.7 to 1.6 when analyzed by X-ray diffraction.

The lithium metal oxide may have a c-axis lattice constant of 14.2 Å to 14.5 Å.

The positive electrode may have an initial efficiency of 80% to 93%.

The silicon-based negative electrode active material may be silicon, silicon oxide, a silicon-carbon composite, or a combination thereof.

The negative electrode active material layer may further include a carbon-based negative electrode active material.

The carbon-based negative electrode active material may be natural graphite, artificial graphite, or a combination thereof.

The silicon-based negative electrode active material may be silicon, silicon oxide, or a combination thereof, and a weight ratio of the silicon-based negative electrode active material and the carbon-based negative electrode active material (silicon-based negative electrode active material:carbon-based negative electrode active material) may be 2:98 to 20:80.

The negative electrode may have an initial efficiency of 87% to 92%.

The lithium secondary battery may have an N/P ratio of 100% to 130%.

The positive electrode active material may have an average particle diameter (D50) of 3 µm to 12 µm.

The positive electrode active material may have a BET specific surface area of 1 m²/g to 10 m²/g.

The positive electrode may have an electrode density of 3.0 g/cc to 4.0 g/cc.

The silicon-based negative electrode active material may have an average particle diameter (D50) of 3 µm to 8 µm.

The negative electrode may have an electrode density of 1.5 g/cc to 1.8 g/cc.

### [Advantageous Effects]

The lithium secondary battery according to one embodiment of the present invention includes a positive electrode including a positive electrode active material having a new composition and a negative electrode including a negative electrode active material having an optimal combination therewith, whereby energy density can be maximized, and lifespan characteristics can also be improved.

### [BRIEF DESCRIPTION OF THE DRAWINGS]

FIG. 1 is a conceptual view of a positive electrode active material according to the present invention.
FIG. 2 is a conceptual view of a lithium secondary battery according to the present invention.

### [MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the context clearly indicates otherwise. As used in the specification, the term "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

In addition, unless otherwise specifically stated, % means wt%, and 1 ppm means 0.0001 wt%.

In the present specification, the term "combination(s) thereof" described in a Markush-type expression means one or more mixtures or combinations selected from the group consisting of the components described in the Markush-type expression, and means that one or more selected from the group consisting of the components is included.

Hereinafter, embodiments of the present invention will be described in detail so that a person having ordinary skill in the art to which the present invention pertains can easily practice the present invention. However, the present invention may be embodied in various different forms and is not limited to the embodiments described herein.

In order to maximize energy density and lifespan characteristics of a lithium secondary battery, first, energy density and lifespan characteristics of the positive electrode and the negative electrode themselves should be excellent. In addition, even when the performance of the positive electrode and the negative electrode themselves is excellent, if the combination between the positive electrode and the negative electrode is not appropriate, lifespan characteristics of the battery may rapidly deteriorate.

From the above viewpoint, the present inventors repeatedly conducted long-term studies on an optimal combination of a positive electrode/negative electrode for maximizing energy density and lifespan characteristics of a lithium secondary battery, and completed the present invention.

A lithium secondary battery according to one embodiment of the present invention includes a positive electrode, a negative electrode, and an electrolyte, and more specifically, may further include a positive electrode, a negative electrode, an electrolyte, and a separator interposed between the positive electrode and the negative electrode.

The lithium secondary battery may optionally further include a battery case accommodating an electrode assembly of the positive electrode, the negative electrode, and the separator, and a sealing member sealing the battery case.

Hereinafter, each configuration of the lithium secondary battery will be described in more detail.

### 1. Positive Electrode

The positive electrode may include a positive electrode current collector and a positive electrode active material layer disposed on the positive electrode current collector.

At this time, the positive electrode active material layer includes a positive electrode active material, and the positive electrode active material includes a lithium metal oxide having a lithium-rich composition represented by Chemical Formula 1.

[Chemical Formula 1] Li₁₊ₓ(NiₐM1_{b}M2_{c})₁₋ₓO₂

In Chemical Formula 1, 0.02≤x≤0.1, 0.75≤a≤0.98, 0.02≤b≤0.25, 0≤c≤0.1, a+b+c=1, M1 is a buffer metal element and is Ti, Nb, W, Zr, V, Cr, Mo, Ta, or a combination thereof, and M2 is a doping element and is Al, B, Y, Co, Mn, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof.

As the positive electrode active material includes the lithium metal oxide having a lithium-rich composition represented by Chemical Formula 1, energy density and lifespan characteristics of the battery can be maximized.

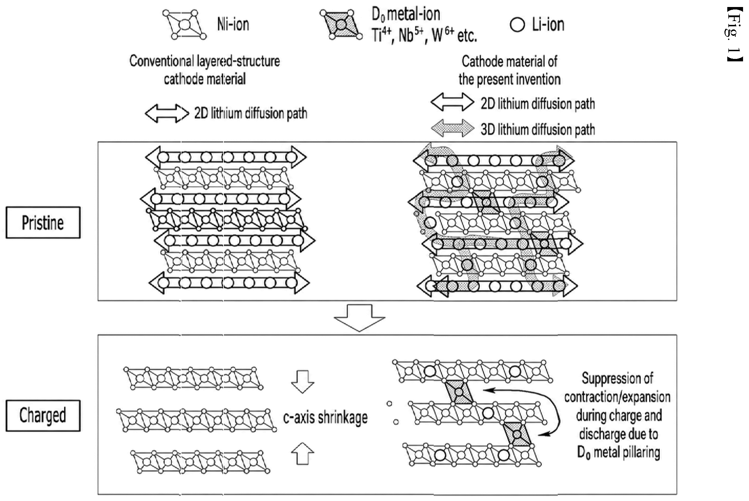

FIG. 1 is a conceptual view of the positive electrode active material according to the present invention. Hereinafter, the principle by which the positive electrode active material according to the present invention can maximize energy density and lifespan characteristics of a battery will be described in more detail with reference to FIG. 1.

The lithium metal oxide represented by Chemical Formula 1 contains an excess amount of lithium, nickel, and a buffer metal element compared with a conventional positive electrode material having a typical composition.

As the lithium metal oxide contains an excess amount of lithium and nickel, not only a nickel-based cation oxidation/reduction reaction but also an anion (oxygen) oxidation/reduction reaction can be utilized, thereby improving capacity characteristics and energy density of the battery.

In addition, as the lithium metal oxide contains the buffer metal element, at least a portion of lithium lattice sites in a lithium layer is substituted with some of the buffer metal element, whereby structural stability of the positive electrode active material can be improved. Accordingly, anisotropic contraction and expansion of the active material during charging and discharging are suppressed, making it possible to implement excellent lifespan characteristics. In addition, the buffer metal elements of the listed elements prefer being located in the lithium layer rather than in the transition metal layer, and together with substitution of some nickel ions in the transition metal layer into the lithium layer due to introduction of excess lithium, cause a disordered cation mixing structure. Such a disordered cation mixing structure can facilitate movement of lithium ions, thereby also contributing to improvement in capacity and energy density.

More specifically, the lithium metal oxide having a lithium-rich composition according to the present invention may have, as a basic framework, a structure in which lithium layers containing lithium and transition metal layers containing a transition metal represented by nickel are alternately stacked. At this time, the listed buffer metal element introduced into the lithium metal oxide prefers lithium layer sites to transition metal layer sites, and at least a portion of lithium sites in the lithium layer may be substituted with the buffer metal element. In addition, introduction of excess lithium may promote substitution of nickel ions in the transition metal layer into the lithium layer. At the same time, due to the introduction of excess lithium, some of lithium ions in the lithium layer may be substituted into the transition metal layer.

That is, the lithium metal oxide according to the present invention may have a structure in which lithium ions, nickel ions, and buffer metal elements are disorderly mixed with one another between the lithium layer and the transition metal layer.

In a conventional layered lithium metal oxide having a typical composition, only lithium exists in the lithium layer, and only transition metals exist in the transition metal layer. Even if some positional exchange between lithium and transition metals occurs, this generally reduces electrochemical activity, and therefore positive electrode materials have been developed in a direction of minimizing such mutual positional exchange. More specifically, even in a positive electrode material having a typical composition, among transition metals, nickel cations in particular have an ionic radius similar to that of lithium ions, and thus nickel cations in the transition metal layer may occupy lithium sites in the lithium layer, which has commonly been referred to as a cation mixing phenomenon. However, when nickel cations occupy lithium sites in the lithium layer, movement of lithium ions is hindered, thereby causing deterioration of electrochemical characteristics such as reduced capacity and charge/discharge efficiency. Accordingly, conventional technologies have been developed in a direction of minimizing such a cation mixing ratio.

In contrast, the lithium metal oxide according to the present invention may have a structure in which lithium in the lithium layer, nickel ions in the transition metal layer, and the buffer metal element are disorderly mixed with one another. Accordingly, unlike the case in which lithium ions generally move two-dimensionally through the lithium layer, during charging and discharging, lithium ions can move three-dimensionally through not only the lithium layer but also the transition metal layer (i.e., insertion and deintercalation), whereby lithium ion movement efficiency can be maximized. As a result, capacity characteristics and energy density of the battery can be improved. In other words, positional exchange between lithium and nickel generally reduces electrochemical activity, but in the present invention, disordered positional exchange of the buffer metal element in addition to lithium and nickel facilitates lithium ion movement, thereby maximizing capacity characteristics and energy density of the battery.

In order to implement such a structure in which lithium in the lithium layer, buffer metal elements and nickel in the transition metal layer are disorderly mixed with one another to an appropriate degree, introduction of an excess amount of lithium and introduction of an appropriate amount of the buffer metal element into the lithium metal oxide are required. In addition, the presence and degree of such a cation disordered mixed structure can be confirmed, as will be described below, by obtaining, during X-ray diffraction analysis, a ratio of the peak intensity of the (003) plane to the peak intensity of the (104) plane (I(003)/I(104)) within the range according to the present invention.

The buffer metal element may be Ti, Nb, W, Zr, V, Cr, Mo, Ta, or a combination thereof. The listed buffer metal elements are transition metal elements having no valence electrons in d orbitals. When a transition metal has no valence electrons in d orbitals, it may have doping preference into the lithium layer rather than the transition metal layer.

In addition, the lithium transition metal oxide according to the present invention may be a compound in a solid solution phase in which Li₂M1O₃ (where M1 is a buffer metal element) having a monoclinic structure and LiMO₂ (where M is Ni and other doping elements) having a rhombohedral structure coexist.

Hereinafter, the composition of the lithium metal oxide according to the present invention will be described in more detail.

The lithium metal oxide according to the present invention is represented by the following Chemical Formula 1.

[Chemical Formula 1] Li₁₊ₓ(NiₐM1_{b}M2_{c})₁₋ₓO₂

In Chemical Formula 1, 0.02≤x≤0.1, 0.75≤a≤0.98, 0.02≤b≤0.25, 0≤c≤0.1, a+b+c=1, M1 is a buffer metal element and is Ti, Nb, W, Zr, V, Cr, Mo, Ta, or a combination thereof, and M2 is a doping element and is Al, B, Y, Co, Mn, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof.

In the lithium metal oxide of Chemical Formula 1, lithium may be included in an amount corresponding to 1+x, and at this time, x may be 0.02≤x≤0.1 or 0.03≤x≤0.06. When x is too small, lithium substitution in the transition metal layer hardly occurs, and thus the above-described disordered mixed structure cannot be implemented, and an effect of improving capacity and energy density may be insignificant. When x is too large, phase stability problems may occur due to excessive occurrence of an anion (oxygen) oxidation/reduction reaction, thereby deteriorating lifespan characteristics.

In the lithium metal oxide of Chemical Formula 1, nickel may be included in an amount corresponding to a, that is, 0.75≤a≤0.98 or 0.85≤a≤0.94. When a is too small, a nickel-based cation oxidation/reduction reaction cannot be sufficiently utilized, and capacity and energy density may decrease. When a is too large, the content of the buffer metal element decreases accordingly, and thus effects of improving lifespan characteristics, capacity characteristics, and energy density according to introduction of the buffer metal element may be insignificant.

In the lithium metal oxide of Chemical Formula 1, M1 may be included in an amount corresponding to b, that is, 0.02≤b≤0.25 or 0.06≤b≤0.15. At this time, M1 may be a buffer metal element and may be Ti, Nb, W, Zr, V, Cr, Mo, Ta, or a combination thereof. When b is too small, effects of improving lifespan characteristics, capacity characteristics, and energy density according to introduction of the buffer metal element may be insignificant. When b is too large, the content of the buffer metal element becomes too high, and disordered mixing among the buffer metal element, nickel, and lithium occurs too excessively, thereby deteriorating a layered crystal structure and rather deteriorating lifespan characteristics, capacity characteristics, and energy density.

In the lithium metal oxide of Chemical Formula 1, M2 may be included in an amount corresponding to c, that is, 0≤c≤0.1. At this time, M2 may be a doping element and may be Al, B, Y, Co, Mn, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof. The content of the doping element may be appropriately selected and controlled to implement a doping effect within a range that does not deteriorate electrochemical characteristics.

Meanwhile, the lithium metal oxide may not contain cobalt and manganese. A conventional positive electrode material having a typical composition includes, in addition to nickel, cobalt and/or manganese at an appropriate content level in order to implement excellent capacity and lifespan characteristics by improving structural stability of the active material. In contrast, the lithium metal oxide according to the present invention can implement excellent electrochemical characteristics without cobalt and manganese due to introduction of an excess amount of lithium, nickel, and the buffer metal element. However, it is a matter of course that the lithium metal oxide according to the present invention does not completely exclude the possibility of using cobalt and manganese.

Hereinafter, X-ray diffraction analysis physical properties of the lithium metal oxide according to the present invention will be described in more detail.

The lithium metal oxide according to the present invention may have a ratio of a peak intensity of a (003) plane to a peak intensity of a (104) plane (I(003)/I(104)) of 0.7 to 1.6, and more specifically 0.9 to 1.5, when analyzed by X-ray diffraction. The ratio of the peak intensity of the (003) plane to the peak intensity of the (104) plane (I(003)/I(104)) may mean the degree of a mixing ratio of transition metal cations in the lithium layer, and a smaller value means that the mixing ratio of transition metal cations in the lithium layer is greater. In the lithium metal oxide according to the present invention, due to introduction of an excess amount of lithium and introduction of the buffer metal element in addition to nickel, substitution amounts of nickel and the buffer metal element in the lithium layer increase, and therefore the ratio of the peak intensity of the (003) plane to the peak intensity of the (104) plane (I(003)/I(104)) may be smaller than that of a conventional positive electrode material having a typical composition. However, when the peak intensity ratio of the (003) plane (I(003)/I(104)) is too small, it means that the buffer metal element content is excessive, and cation mixing occurs too excessively, thereby rather deteriorating lifespan characteristics, capacity characteristics, and energy density.

In addition, the lithium metal oxide according to the present invention may have a c-axis lattice constant of 14.2 Å to 14.5 Å. In the composition of the lithium metal oxide according to the present invention, the c-axis lattice constant may vary depending on the introduction amount of the buffer metal element, and when the c-axis lattice constant satisfies the above range, effects of improving lifespan, capacity, and energy density of the battery according to introduction of the buffer metal element can be preferably implemented.

Meanwhile, the lithium metal oxide according to the present invention may have a secondary particle form formed by aggregation of a plurality of primary particles. The "secondary particle" means an aggregate in which several tens to several hundreds of primary particles are aggregated by physical or chemical bonding between the primary particles even without an intentional aggregation or assembly process for the primary particles, that is, a secondary structure. The "primary particle" means a minimum particle unit distinguished as one lump when a cross-section of a positive electrode active material is observed through a scanning electron microscope (SEM), and may be composed of one crystal grain or may be composed of a plurality of crystal grains. The "crystal grain" means a distinguishable region in which atoms in a primary particle form a lattice structure in a predetermined direction.

The positive electrode active material may have an average particle diameter (D50) of secondary particles of 3 µm to 12 µm. When the average particle diameter (D50) of the positive electrode active material is too small, positive electrode mixture density may be too small. When the average particle diameter (D50) of the positive electrode active material is too large, capacity and rate characteristics of the positive electrode active material may deteriorate. Accordingly, from the viewpoint of maximizing energy density and rate characteristics of the battery, it may be appropriate that the average particle diameter (D50) of the positive electrode active material satisfy the above range. In the present specification, the average particle diameter (D50) may be defined as a particle diameter corresponding to 50% of a volume cumulative amount in a particle size distribution curve of particles. The average particle diameter (D50) may be measured, for example, using a laser diffraction method.

The positive electrode active material may have a BET specific surface area of 1 m²/g to 10 m²/g. When the BET specific surface area of the positive electrode active material is too small, a lithium ion movement area decreases, and thus it may be difficult to implement sufficient capacity and rate characteristics. When the BET specific surface area of the positive electrode active material is too large, lifespan characteristics may deteriorate due to side reactions with the electrolyte. In the present specification, the specific surface area of the active material may be measured with respect to active material powder using a BET method (Surface area and Porosity analyzer) (Micromeritics, ASAP2020).

As long as the composition of the positive electrode active material satisfies Chemical Formula 1 according to the present invention, a method for manufacturing the positive electrode active material is not particularly limited.

For example, in one embodiment, the positive electrode active material may be manufactured by mixing, in a solid state, raw materials containing each element constituting the positive electrode active material composition, that is, a nickel raw material, a buffer metal raw material, a lithium raw material, and other doping raw materials, at a stoichiometric ratio corresponding to the composition of Chemical Formula 1, and then calcining the same.

The nickel raw material may be Ni(OH)₂, NiO, Ni₂O₃, or a combination thereof, but is not necessarily limited thereto.

The buffer metal raw material may be an oxide, hydroxide, carbonate, sulfate, phosphate, or a combination thereof containing the buffer metal element according to the present invention. At this time, the buffer metal element may be Ti, Nb, W, Zr, V, Cr, Mo, or Ta. For example, the buffer metal raw material may be TiO₂, Ti(OH)₂, Ti(CO₃)₂, Ti₂(CO₃)₃, Ti[OCH(CH₃)₂]₄, and the like, but is not necessarily limited thereto.

As the lithium raw material, a lithium-containing sulfate, nitrate, acetate, carbonate, oxalate, citrate, halide, hydroxide, oxyhydroxide, or the like may be used, and is not particularly limited as long as it can be dissolved in water. Specifically, the lithium raw material may be Li₂CO₃, LiNO₃, LiNO₂, LiOH, LiOH·H₂O, LiH, LiF, LiCl, LiBr, LiI, CH₃COOLi, Li₂O, Li₂SO₄, CH₃COOLi, Li₃C₆H₅O₇, or a combination thereof, but is not limited thereto.

In another embodiment, the positive electrode active material may be manufactured by mixing a nickel raw material, a buffer metal raw material, and a solvent, and then spray-drying the mixture to form a precursor, mixing the precursor with a lithium raw material, and then calcining the same. At this time, each of the nickel raw material, the buffer metal raw material, and the lithium raw material may be introduced at a stoichiometric ratio corresponding to the composition of Chemical Formula 1.

The nickel raw material may be Ni(OH)₂, NiO, Ni₂O₃, or a combination thereof, but is not necessarily limited thereto.

The buffer metal raw material may be an oxide, hydroxide, carbonate, sulfate, phosphate, or a combination thereof containing the buffer metal element according to the present invention. At this time, the buffer metal element may be Ti, Nb, W, Zr, V, Cr, Mo, or Ta. For example, the buffer metal raw material may be TiO₂, Ti(OH)₂, Ti(CO₃)₂, Ti₂(CO₃)₃, Ti[OCH(CH₃)₂]₄, and the like, but is not necessarily limited thereto.

The solvent may be water, ethanol, or a combination thereof, but is not necessarily limited thereto.

The precursor formed by the spray drying may be a hydroxide, carbonate, hydroxide/oxide composite, carbonate/oxide composite, or a combination thereof, but is not necessarily limited thereto.

The spray drying may be performed by spraying and drying through a spray dryer.

As the lithium raw material, a lithium-containing sulfate, nitrate, acetate, carbonate, oxalate, citrate, halide, hydroxide, oxyhydroxide, or the like may be used, and is not particularly limited as long as it can be dissolved in water. Specifically, the lithium raw material may be Li₂CO₃, LiNO₃, LiNO₂, LiOH, LiOH·H₂O, LiH, LiF, LiCl, LiBr, LiI, CH₃COOLi, Li₂O, Li₂SO₄, CH₃COOLi, Li₃C₆H₅O₇, or a combination thereof, but is not limited thereto.

In another embodiment, the positive electrode active material may be manufactured by forming a precursor containing nickel and buffer metal raw materials according to a conventional wet coprecipitation reaction using a nickel raw material and a buffer metal raw material, and then mixing and calcining the precursor with a lithium raw material.

The precursor formed according to the coprecipitation reaction may be a hydroxide, carbonate, or a combination thereof, but is not necessarily limited thereto.

As the lithium raw material, a lithium-containing sulfate, nitrate, acetate, carbonate, oxalate, citrate, halide, hydroxide, oxyhydroxide, or the like may be used, and is not particularly limited as long as it can be dissolved in water. Specifically, the lithium raw material may be Li₂CO₃, LiNO₃, LiNO₂, LiOH, LiOH·H₂O, LiH, LiF, LiCl, LiBr, LiI, CH₃COOLi, Li₂O, Li₂SO₄, CH₃COOLi, Li₃C₆H₅O₇, or a combination thereof, but is not limited thereto.

Meanwhile, the positive electrode current collector is not particularly limited as long as it has conductivity without causing a chemical change in the battery, and examples thereof may include stainless steel, aluminum, nickel, titanium, calcined carbon, or aluminum or stainless steel surface-treated with carbon, nickel, titanium, silver, or the like. In addition, the positive electrode current collector may generally have a thickness of 3 µm to 500 µm, and fine irregularities may be formed on a surface of the positive electrode current collector to increase adhesion of the positive electrode active material. For example, the positive electrode current collector may be used in various forms such as a film, a sheet, a foil, a net, a porous body, a foam, and a nonwoven fabric.

In addition, the positive electrode active material layer may further include a binder and/or a conductive material together with the above-described positive electrode active material.

The binder serves to improve adhesion between positive electrode active material particles and adhesion between the positive electrode active material and the positive electrode current collector. Specific examples thereof may include polyvinylidene fluoride (PVDF), a vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated-EPDM, styrene-butadiene rubber (SBR), fluorine rubber, or various copolymers thereof, and one thereof alone or a mixture of two or more thereof may be used, but the binder is not limited thereto. The binder may be included in an amount of 1 wt% to 30 wt% based on the total weight of the positive electrode active material layer.

The conductive material is used to impart conductivity to the electrode, and may be used without particular limitation as long as it has electron conductivity and does not cause a chemical change in the battery to be configured. Specific examples thereof may include graphite such as natural graphite or artificial graphite; carbon-based materials such as carbon black, acetylene black, Ketjen black, channel black, furnace black, lamp black, thermal black, and carbon fibers; metal powder or metal fibers such as copper, nickel, aluminum, and silver; conductive whiskers such as zinc oxide and potassium titanate; conductive metal oxides such as titanium oxide; or conductive polymers such as polyphenylene derivatives, and one thereof alone or a mixture of two or more thereof may be used, but the conductive material is not limited thereto. The conductive material may generally be included in an amount of 1 wt% to 30 wt% based on the total weight of the positive electrode active material layer.

The positive electrode may be manufactured according to a conventional method for manufacturing a positive electrode, except that the above-described positive electrode active material is used.

Specifically, the positive electrode may be manufactured by applying, onto a positive electrode current collector, a composition for forming a positive electrode active material layer including the above-described positive electrode active material and, as necessary, optionally including a binder, a conductive material, or a solvent, and then drying and rolling the same. At this time, the types and contents of the positive electrode active material, the binder, and the conductive material are as described above.

The solvent may be a solvent generally used in the art, and examples thereof may include dimethyl sulfoxide (DMSO), isopropyl alcohol, N-methylpyrrolidone (NMP), acetone, or water, and one thereof alone or a mixture of two or more thereof may be used. The amount of the solvent used is sufficient as long as it can dissolve or disperse the positive electrode active material, the conductive material, and the binder in consideration of a coating thickness and manufacturing yield of the slurry, and can provide a viscosity capable of exhibiting excellent thickness uniformity during subsequent coating for manufacturing the positive electrode.

Alternatively, the positive electrode may be manufactured by casting the composition for forming the positive electrode active material layer on a separate support, and then laminating a film obtained by peeling the composition from the support onto a positive electrode current collector.

Meanwhile, the positive electrode may have an electrode density of 3.0 g/cc to 4.0 g/cc. When the electrode density of the positive electrode is too small, energy density of the battery may deteriorate. When the electrode density of the positive electrode is too large, secondary particles may be destroyed, thereby lowering lifespan characteristics, or electrolyte impregnation into the electrode may become difficult, thereby causing a problem of reduced capacity.

### 2. Negative Electrode

The negative electrode may include a negative electrode current collector and a negative electrode active material layer disposed on the negative electrode current collector.

At this time, the negative electrode active material layer includes a negative electrode active material, and the negative electrode active material includes a silicon-based negative electrode active material.

Since the silicon-based negative electrode active material has a higher theoretical capacity than a carbon-based negative electrode active material and has a fast reaction rate with lithium, when the negative electrode includes the silicon-based negative electrode active material, energy density and rapid charging performance can be improved.

The silicon-based negative electrode active material may be silicon, silicon oxide, a silicon-carbon composite, or a combination thereof. The silicon oxide may be, for example, SiOₓ (0<x≤2).

The silicon-based negative electrode active material may further include a carbon coating layer on a particle surface, as necessary. At this time, a carbon coating amount may be 20 wt% or less based on the total weight of the silicon-based negative electrode active material, and more specifically 0.1 wt% to 20 wt%. When the carbon coating is applied, electrical conductivity of the silicon surface is improved, SEI layer uniformity is improved, and initial efficiency and lifespan characteristics can be improved.

The carbon coating layer may be formed by a method such as dry coating, wet coating, chemical vapor deposition (CVD), physical vapor deposition (PVD), atomic layer deposition (ALD), or the like.

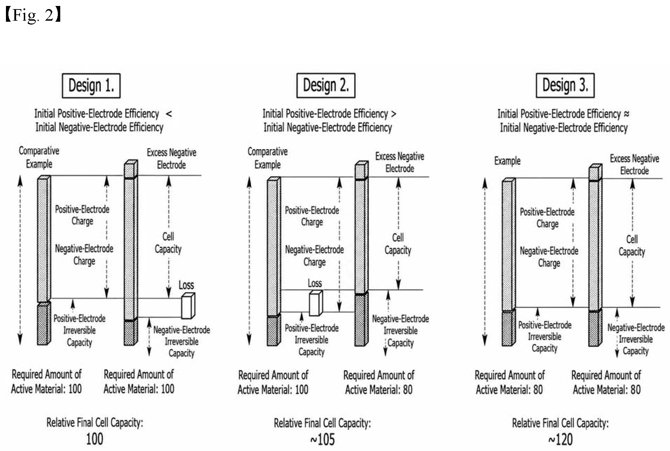

FIG. 2 is a conceptual view of the lithium secondary battery according to the present invention. Referring to FIG. 2, at this time, an absolute value of a difference in initial efficiency between the positive electrode and the negative electrode may be 3% or less, and more specifically 2.8% or less. Since the difference in initial efficiency between the positive electrode and the negative electrode is sufficiently small as in the above range, irreversible capacities of the positive electrode and the negative electrode are substantially matched to maximize an available range of active materials that can participate in charging and discharging in the cell, whereby a large capacity can be utilized. In addition, since continuous use of both end regions having very high impedance resistance in the positive electrode and the negative electrode during cycles (low SOC of the positive electrode and high SOC of the negative electrode) can be avoided, lifespan characteristics can be maximized. Accordingly, the combination between the positive electrode and the negative electrode is optimized, and implementation of energy density and lifespan characteristics of the battery can be maximized.

From the viewpoint of appropriately implementing the above-described difference in initial efficiency between the positive electrode and the negative electrode, the negative electrode active material layer may optionally further include a carbon-based negative electrode active material as necessary. Accordingly, by appropriately adjusting a mixed weight ratio of the silicon-based negative electrode active material and the carbon-based negative electrode active material as the negative electrode active material, the difference in initial efficiency between the positive electrode and the negative electrode according to the present invention can be more easily implemented within the range according to the present invention.

For example, the silicon-based negative electrode active material may be silicon, silicon oxide, or a combination thereof, and at this time, a weight ratio of the silicon-based negative electrode active material and the carbon-based negative electrode active material (silicon-based negative electrode active material:carbon-based negative electrode active material) may be 2:98 to 20:80, and more specifically 3:97 to 12:88. When the mixed weight ratio of the silicon-based negative electrode active material and the carbon-based negative electrode active material satisfies the above range, a difference in initial efficiency between the positive electrode and the negative electrode configured with the positive electrode active material according to the present invention can be easily implemented within the range according to the present invention. Accordingly, implementation of energy density and lifespan characteristics of the battery can be maximized.

Alternatively, the silicon-based negative electrode active material may be a silicon-carbon composite, and at this time, by appropriately adjusting a composite ratio between silicon and carbon, the difference in initial efficiency between the positive electrode and the negative electrode configured with the positive electrode active material according to the present invention can be implemented within the range according to the present invention.

In addition, the silicon-based negative electrode active material may have an average particle diameter (D50) of 3 µm to 8 µm. When the average particle diameter (D50) of the silicon-based negative electrode active material is too small, dispersion is not achieved in a mixing step, and non-uniform swelling due to non-uniform distribution in the electrode may occur, adversely affecting lifespan characteristics. When the average particle diameter (D50) of the silicon-based negative electrode active material is too large, rate characteristics may deteriorate due to deterioration of electrical characteristics, and lifespan characteristics may deteriorate due to local large swelling in the electrode.

The carbon-based negative electrode active material may be, for example, natural graphite, artificial graphite, or a combination thereof, but is not necessarily limited thereto.

Accordingly, the positive electrode configured with the positive electrode active material according to the present invention may have an initial efficiency of 80% to 93% or 85% to 93%. In addition, the negative electrode configured with the negative electrode active material according to the present invention may have an initial efficiency of 87% to 92%.

In addition, the lithium secondary battery according to one embodiment of the present invention may have an N/P ratio of 100% to 130%. In the present specification, the "N/P ratio" means a ratio of discharge capacity of the negative electrode to discharge capacity of the positive electrode. When the N/P ratio of the lithium secondary battery is too small, there may be a problem of battery degradation due to lithium precipitation in the negative electrode region. When the N/P ratio of the lithium secondary battery is too large, there may be a problem of reduced energy density.

The negative electrode current collector is not particularly limited as long as it has high conductivity without causing a chemical change in the battery, and examples thereof may include copper, stainless steel, aluminum, nickel, titanium, calcined carbon, copper or stainless steel surface-treated with carbon, nickel, titanium, silver, or the like, an aluminum-cadmium alloy, and the like. In addition, the negative electrode current collector may generally have a thickness of 3 µm to 500 µm, and like the positive electrode current collector, fine irregularities may be formed on a surface of the current collector to enhance bonding force of the negative electrode active material. For example, the negative electrode current collector may be used in various forms such as a film, a sheet, a foil, a net, a porous body, a foam, and a nonwoven fabric.

The negative electrode active material layer may optionally include a binder and a conductive material together with the negative electrode active material. As an example, the negative electrode active material layer may be manufactured by applying and drying, on a negative electrode current collector, a composition for forming a negative electrode active material layer including the negative electrode active material and optionally including the binder and the conductive material, or may be manufactured by casting the composition for forming the negative electrode on a separate support and then laminating a film obtained by peeling the composition from the support onto the negative electrode current collector.

Examples of the binder may include polyvinylidene fluoride (PVDF), a vinylidene fluoride-hexafluoropropylene copolymer (PVDF-co-HFP), polyvinyl alcohol, polyacrylic acid, polyacrylamide, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated-EPDM, styrene-butadiene rubber (SBR), fluorine rubber, or various copolymers thereof, and one thereof alone or a mixture of two or more thereof may be used. The binder may be included in an amount of 1 wt% to 20 wt%, 2 wt% to 20 wt%, or 2 wt% to 10 wt% based on the total weight of the negative electrode active material layer.

Examples of the conductive material may include spherical or flake-like graphite; carbon-based materials such as carbon black, acetylene black, Ketjen black, channel black, furnace black, lamp black, thermal black, carbon fibers, single-walled carbon nanotubes, and multi-walled carbon nanotubes; metal powder or metal fibers such as copper, nickel, aluminum, and silver; conductive whiskers such as zinc oxide and potassium titanate; conductive metal oxides such as titanium oxide; or conductive polymers such as polyphenylene derivatives, and one thereof alone or a mixture of two or more thereof may be used. The conductive material may be included in an amount of 0.1 wt% to 30 wt%, 0.1 wt% to 20 wt%, or 0.1 wt% to 10 wt% based on the total weight of the negative electrode active material layer.

In addition, the negative electrode may have an electrode density of 1.5 g/cc to 1.8 g/cc. When the electrode density of the negative electrode is too small, energy density of the battery may deteriorate. When the electrode density of the negative electrode is too large, lifespan characteristics may deteriorate due to intensified side reactions caused by destruction of secondary particles and increased surface exposure, and inability to impregnate the electrolyte due to clogging on the surface side.

### 3. Electrolyte

The electrolyte may include an organic liquid electrolyte, an inorganic liquid electrolyte, a solid polymer electrolyte, a gel-type polymer electrolyte, a solid inorganic electrolyte, a molten inorganic electrolyte, and the like, which can be used when manufacturing a lithium secondary battery, but the electrolyte is not limited thereto.

Specifically, the organic liquid electrolyte may include an organic solvent and a lithium salt.

As the organic solvent, any solvent may be used without particular limitation as long as it can serve as a medium through which ions involved in an electrochemical reaction of the battery can move. Specifically, examples of the organic solvent may include ester-based solvents such as methyl acetate, ethyl acetate, γ-butyrolactone, and ε-caprolactone; ether-based solvents such as dibutyl ether and tetrahydrofuran; ketone-based solvents such as cyclohexanone; aromatic hydrocarbon-based solvents such as benzene and fluorobenzene; carbonate-based solvents such as dimethyl carbonate (DMC), diethyl carbonate (DEC), methyl ethyl carbonate (MEC), ethyl methyl carbonate (EMC), ethylene carbonate (EC), and propylene carbonate (PC); alcohol-based solvents such as ethyl alcohol and isopropyl alcohol; nitriles represented by R-CN, wherein R is a C2 to C20 linear, branched, or cyclic hydrocarbon group and may include a double-bond aromatic ring or an ether bond; amides such as dimethylformamide; dioxolanes such as 1,3-dioxolane; or sulfolanes. Among these, carbonate-based solvents are preferable, and a mixture of a cyclic carbonate having high ionic conductivity and high dielectric constant, which can improve charge/discharge performance of a battery, such as ethylene carbonate or propylene carbonate, and a low-viscosity linear carbonate-based compound, such as ethyl methyl carbonate, dimethyl carbonate, or diethyl carbonate, is more preferable. In this case, when the cyclic carbonate and the chain carbonate are mixed and used at a volume ratio of about 1:1 to about 1:9, excellent electrolyte solution performance may be exhibited.

The lithium salt may be used without particular limitation as long as it is a compound capable of providing lithium ions used in a lithium secondary battery. Specifically, as the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like may be used. The concentration of the lithium salt is preferably used within a range of 0.1 M to 5.0 M. When the concentration of the lithium salt is within the above range, the electrolyte has appropriate conductivity and viscosity, and thus excellent electrolyte performance can be exhibited and lithium ions can effectively move.

In addition to the above electrolyte components, the electrolyte may further include one or more additives for the purpose of improving lifespan characteristics of the battery, suppressing reduction in battery capacity, improving discharge capacity of the battery, and the like, such as a haloalkylene carbonate-based compound such as difluoroethylene carbonate, pyridine, triethyl phosphite, triethanolamine, cyclic ether, ethylene diamine, n-glyme, hexamethylphosphoric triamide, a nitrobenzene derivative, sulfur, a quinone imine dye, an N-substituted oxazolidinone, an N,N-substituted imidazolidine, ethylene glycol dialkyl ether, an ammonium salt, pyrrole, 2-methoxy ethanol, aluminum trichloride, fluoroethylene carbonate (FEC), vinylene carbonate (VC), vinylethylene carbonate (VEC), ethylene sulfate (ESa), lithium difluorophosphate (LiPO₂F₂), lithium bis(oxalato)borate (LiBOB), lithium tetrafluoroborate (LiBF₄), lithium difluoro(oxalato)borate (LiDFOB), lithium difluorobis(oxalato)phosphate (LiDFBP), lithium tetrafluoro(oxalato)phosphate (LiTFOP), lithium methyl sulfate (LiMS), lithium ethyl sulfate (LiES), propane sultone (PS), propene sultone (PRS), succinonitrile (SN), adiponitrile (AND), 1,3,6-hexanetricarbonitrile (HTCN), 1,4-dicyano-2-butene (DCB), fluorobenzene (FB), ethyl di(prop-2-yn-1-yl) phosphate (EDP), and 5-methyl-5-propargyloxycarbonyl-1,3-dioxan-2-one (MPOD). At this time, the additive may be included in an amount of 0.1 wt% to 5 wt% based on the total weight of the electrolyte.

### 4. Separator

The separator separates the negative electrode and the positive electrode and provides a movement path for lithium ions, and may be used without particular limitation as long as it is commonly used as a separator in lithium secondary batteries. In particular, a separator having low resistance to ion movement of the electrolyte and excellent electrolyte solution impregnation ability is preferable. Specifically, a porous polymer film, for example, a porous polymer film made of a polyolefin-based polymer such as an ethylene homopolymer, a propylene homopolymer, an ethylene/butene copolymer, an ethylene/hexene copolymer, or an ethylene/methacrylate copolymer, or a laminated structure having two or more layers thereof may be used. In addition, a conventional porous nonwoven fabric, for example, a nonwoven fabric made of high-melting-point glass fibers, polyethylene terephthalate fibers, or the like, may also be used. In addition, a coated separator including a ceramic component or a polymer material may be used to secure heat resistance or mechanical strength, and may optionally be used in a single-layer or multilayer structure.

Hereinafter, embodiments of the present invention will be described in more detail through Examples. However, the following Examples are merely preferred embodiments of the present invention, and the present invention is not limited by the following Examples.

### Example 1

### (1) Manufacture of Positive Electrode

(Preparation of Positive Electrode Active Material) A hydroxide precursor having a composition of Ni_{0.95}Ti_{0.05}(OH)₂ prepared using a coprecipitation reaction and LiOH·H₂O as a lithium raw material were weighed and mixed such that a molar ratio of lithium to all metals in the precursor (Li/Me) was 1.05 (+0.01, an additional input amount considering volatilization of lithium), and then calcined at a temperature of 700°C for 10 hours under an O₂ atmosphere, thereby manufacturing a positive electrode active material having a composition of Li_{1.024}Ni_{0.927}Ti_{0.049}O₂.

(Manufacture of Positive Electrode) Thereafter, the positive electrode active material, a conductive material (carbon black, Denka black), and a binder (PVDF, KF1100) were mixed at 95.5:1.5:2.5 wt%, and NMP (N-methyl-2-pyrrolidone) was added to adjust viscosity such that a solid content was about 70%, thereby preparing a positive electrode active material slurry. The prepared slurry was applied onto a positive electrode current collector sheet, dried, and then rolled to manufacture a positive electrode.

### (2) Manufacture of Negative Electrode

(Preparation of Negative Electrode Active Material) A negative electrode active material was prepared by mixing SiOₓ silicon oxide and graphite (artificial graphite) at 3:97 wt%. At this time, the average particle diameter (D50) of the SiOₓ silicon oxide was 6 µm.

(Manufacture of Negative Electrode) Thereafter, the negative electrode active material, a conductive material (Super-C65), carboxymethyl cellulose (CMC), and styrene-butadiene rubber (SBR) were mixed in water at 95:1:1.5:2.5 wt% to prepare an aqueous negative electrode slurry. The prepared slurry was applied onto a negative electrode current collector sheet, dried, and then rolled to manufacture a negative electrode.

### Example 2

A positive electrode and a negative electrode were each manufactured in the same manner as in Example 1, except that, in the positive electrode active material preparation step, a hydroxide precursor having a composition of Ni_{0.9}Ti_{0.1}(OH)₂ was used, the Li/Me ratio was adjusted to be 1.1 (+0.01, an additional input amount considering volatilization of lithium) to use a positive electrode active material having a composition of Li₁.₀₄₈Ni₀.₈₅₇Ti₀.₀₉₅O₂, and, in the negative electrode active material preparation step, SiOₓ silicon oxide and graphite (artificial graphite) were mixed at 6:94 wt%.

### Example 3

A positive electrode and a negative electrode were each manufactured in the same manner as in Example 1, except that, in the positive electrode active material preparation step, a hydroxide precursor having a composition of Ni_{0.85}Ti_{0.15}(OH)₂ was used, the Li/Me ratio was adjusted to be 1.5 (+0.01, an additional input amount considering volatilization of lithium) to use a positive electrode active material having a composition of Li_{1.070}Ni_{0.791}Ti_{0.140}O₂, and, in the negative electrode active material preparation step, SiOₓ silicon oxide and graphite (artificial graphite) were mixed at 10:90 wt%.

### Example 4

A positive electrode and a negative electrode were each manufactured in the same manner as in Example 1, except that, in the positive electrode active material preparation step, a hydroxide precursor having a composition of Ni_{0.8}Ti_{0.2}(OH)₂ was used, the Li/Me ratio was adjusted to be 1.2 (+0.01, an additional input amount considering volatilization of lithium) to use a positive electrode active material having a composition of Li₁.₀₉₁Ni₀.₇₂₇Ti₀.₁₈₂O₂, and, in the negative electrode active material preparation step, SiOₓ silicon oxide and graphite (artificial graphite) were mixed at 15:85 wt%.

### Comparative Example 1

A positive electrode and a negative electrode were each manufactured in the same manner as in Example 1, except that, in the positive electrode active material preparation step, a positive electrode active material having a composition of Li_{1.13}[Ni_{0.35}Mn_{0.65}]_{0.87}O₂ was used according to a conventional manufacturing method, and, in the negative electrode active material preparation step, SiOₓ silicon oxide and graphite (artificial graphite) were mixed at 6:94 wt%.

### Comparative Example 2

A positive electrode and a negative electrode were each manufactured in the same manner as in Example 1, except that, in the positive electrode active material preparation step, a positive electrode active material having a composition of LiNi_{0.6}Co_{0.2}Mn_{0.2}O₂ was used according to a conventional manufacturing method, and, in the negative electrode active material preparation step, SiOₓ silicon oxide and graphite (artificial graphite) were mixed at 6:94 wt%.

### Comparative Example 3

A positive electrode and a negative electrode were each manufactured in the same manner as in Example 1, except that, in the positive electrode active material preparation step, a positive electrode active material having a composition of LiNi_{0.8}Co_{0.1}Mn_{0.1}O₂ was used according to a conventional manufacturing method, and, in the negative electrode active material preparation step, SiOₓ silicon oxide and graphite (artificial graphite) were mixed at 6:94 wt%.

### Comparative Example 4

A positive electrode and a negative electrode were each manufactured in the same manner as in Example 1, except that, in the positive electrode active material preparation step, a hydroxide precursor having a composition of Ni_{0.7}Ti_{0.3}(OH)₂ was used, the Li/Me ratio was adjusted to be 1.3 (+0.01, an additional input amount considering volatilization of lithium) to use a positive electrode active material having a composition of Li_{1.13}Ni_{0.609}Ti_{0.261}O₂, and, in the negative electrode active material preparation step, SiOₓ silicon oxide and graphite (artificial graphite) were mixed at 6:94 wt%.

### Comparative Example 5

A positive electrode and a negative electrode were each manufactured in the same manner as in Example 1, except that, in the positive electrode active material preparation step, a hydroxide precursor having a composition of Ni(OH)₂ was used, the Li/Me ratio was adjusted to be 1.0 (+0.01, an additional input amount considering volatilization of lithium) to use a positive electrode active material having a composition of LiNiO₂, and, in the negative electrode active material preparation step, SiOₓ silicon oxide and graphite (artificial graphite) were mixed at 6:94 wt%.

### Reference Examples 1 to 4

A positive electrode and a negative electrode were each manufactured in the same manner as in Example 1, except that the compositions of the positive electrode active material and the negative electrode active material were changed as shown in Table 1 below.

### Reference Example 5

A positive electrode and a negative electrode were each manufactured in the same manner as in Example 2, except that, in the negative electrode active material preparation step, SiOₓ silicon oxide and graphite (artificial graphite) were mixed at 0:100 wt%.

### Reference Example 6

A positive electrode and a negative electrode were each manufactured in the same manner as in Example 2, except that, in the negative electrode active material preparation step, SiOₓ silicon oxide and graphite (artificial graphite) were mixed at 30:70 wt%.

Tables 1 and 2 below summarize respective compositions of the positive electrode active materials and the negative electrode active materials of the Examples, Comparative Examples, and Reference Examples, and XRD physical property evaluation results of the positive electrode active materials according to Experimental Example 1 to be described below.

**[Table 1]**

| | Positive Electrode Active Material | | | | | | | |
|---|---|---|---|---|---|---|---|---|
| | Composition | x | a | b | c | I(003)/I(104) | c-Axis Lattice Constant (Å) | Average Particle Diameter (D50, µm) |
| Example 1 | Li_{1.024}Ni_{0.927}Ti_{0.049}O₂ | 0.024 | 0.95 | 0.05 | 0 | 1.53 | 14.24 | 12 |
| Example 2 | Li_{1.048}Ni_{0.857}Ti_{0.095}O₂ | 0.048 | 0.9 | 0.1 | 0 | 1.41 | 14.32 | 12 |
| Example 3 | Li_{1.070}Ni_{0.791}Ti_{0.140}O₂ | 0.07 | 0.85 | 0.15 | 0 | 1.17 | 14.38 | 12 |
| Example 4 | Li_{1.091}Ni_{0.727}Ti_{0.182}O₂ | 0.091 | 0.8 | 0.2 | 0 | 0.8 | 14.44 | 12 |
| Comparativ e Example 1 | Li_{1.13}[Ni_{0.35}Mn_{0.65}]_{0.87}O₂ | 0.13 | 0.35 | 0 | 0.65 | 1.68 | 14.26 | 12 |
| Comparativ e Example 2 | LiNi_{0.6}Co_{0.2}Mn_{0.2}O₂ | 0 | 0.6 | 0 | 0.4 | 1.7 | 14.26 | 12 |
| Comparativ e Example 3 | LiNi_{0.8}Co_{0.1}Mn_{0.1}O₂ | 0 | 0.8 | 0 | 0.2 | 1.68 | 14.24 | 12 |
| Comparativ e Example 4 | Li_{1.13}Ni_{0.609}Ti_{0.261}O₂ | 0.13 | 0.7 | 0.3 | 0 | 0.59 | 14.53 | 12 |
| Comparativ e Example 5 | LiNiO₂ | 0 | 1 | 0 | 0 | 1.64 | 14.21 | 12 |
| Reference Example 1 | Li_{1.024}Ni_{0.927}Ti_{0.049}O₂ | 0.024 | 0.95 | 0.05 | 0 | 1.53 | 14.24 | 12 |
| Reference Example 2 | Li_{1.091}Ni_{0.727}Ti_{0.182}O₂ | 0.091 | 0.8 | 0.2 | 0 | 0.8 | 14.44 | 12 |
| Reference Example 3 | Li_{1.091}Ni_{0.727}Ti_{0.182}O₂ | 0.091 | 0.8 | 0.2 | 0 | 0.8 | 14.44 | 12 |
| Reference Example 4 | Li_{1.091}Ni_{0.727}Ti_{0.182}O₂ | 0.091 | 0.8 | 0.2 | 0 | 0.8 | 14.44 | 12 |
| Reference Example 5 | Li_{1.048}Ni_{0.857}Ti_{0.095}O₂ | 0.048 | 0.9 | 0.1 | 0 | 1.41 | 14.32 | 12 |
| Reference Example 6 | Li_{1.048}Ni_{0.857}Ti_{0.095}O₂ | 0.048 | 0.9 | 0.1 | 0 | 1.41 | 14.32 | 12 |

**[Table 2]**

| | Negative Electrode Active Material |
|---|---|
| | Composition |
| Example 1 | SiOx:C=3:97 |
| Example 2 | SiOx:C=6:94 |
| Example 3 | SiOx:C=10:90 |
| Example 4 | SiOx:C=15:85 |
| Comparative Example 1 | SiOx:C=6:94 |
| Comparative Example 2 | SiOx:C=6:94 |
| Comparative Example 3 | SiOx:C=6:94 |
| Comparative Example 4 | SiOx:C=6:94 |
| Comparative Example 5 | SiOx:C=6:94 |
| Reference Example 1 | SiOx:C=15:85 |
| Reference Example 2 | SiOx:C=3:97 |
| Reference Example 3 | SiOx:C=6:94 |
| Reference Example 4 | SiOx:C=10:90 |
| Reference Example 5 | SiOx:C=0:100 |
| Reference Example 6 | SiOx:C=30:70 |

Tables 3 and 4 below summarize physical properties of the positive electrode active materials, positive electrodes, and negative electrodes according to Experimental Example 1, Experimental Example 2, and Experimental Example 3 to be described below, and electrochemical characteristic evaluation results of full-cell batteries.

**[Table 3]**

| | Positive Electrode | | | | Negative Electrode | | | | Difference in Initial Efficiency Between Positive Electrode and Negative Electrode (%) |
|---|---|---|---|---|---|---|---|---|---|
| | Initial Charge Capacity (mAh/g) | Initial Discharge Capacity (mAh/g) | Initial Efficiency (%) | Electrode Density (g/cc) | Initial Charge Capacity (mAh/g) | Initial Discharge Capacity (mAh/g) | Initial Efficiency (%) | Electrode Density (g/cc) | |
| Example 1 | 262.6 | 242.4 | 92.3 | 3.6 | 412.3 | 376.2 | 91.2 | 1.65 | 1.1 |
| Example 2 | 272.6 | 244.0 | 89.5 | 3.6 | 428.7 | 388.1 | 90.5 | 1.65 | 1.0 |
| Example 3 | 282.1 | 245.7 | 87.1 | 3.6 | 441.2 | 394.0 | 89.3 | 1.65 | 2.2 |
| Example 4 | 295.2 | 251.2 | 85.1 | 3.6 | 461.5 | 405.3 | 87.8 | 1.65 | 2.7 |
| Compara tive Example 1 | 292.0 | 269.7 | 92.4 | 3.0 | 428.7 | 388.1 | 90.5 | 1.65 | 1.9 |
| Compara tive Example 2 | 201.8 | 180.6 | 89.5 | 3.6 | 428.7 | 388.1 | 90.5 | 1.65 | 1.0 |
| Compara tive Example 3 | 226.0 | 206.3 | 91.3 | 3.6 | 428.7 | 388.1 | 90.5 | 1.65 | 0.8 |
| Comparative Example 4 | 300.9 | 249.8 | 83.0 | 3.5 | 428.7 | 388.1 | 90.5 | 1.65 | 7.5 |
| Compara tive Example 5 | 251.7 | 234.3 | 93.1 | 3.6 | 428.7 | 388.1 | 90.5 | 1.65 | 2.6 |
| Referenc e Example 1 | 262.6 | 242.4 | 92.3 | 3.6 | 461.5 | 405.3 | 87.8 | 1.65 | 4.5 |
| Referenc e Example 2 | 295.2 | 251.2 | 85.1 | 3.6 | 428.7 | 388.1 | 91.2 | 1.65 | 6.1 |
| Referenc e Example 3 | 295.2 | 251.2 | 85.1 | 3.6 | 441.2 | 394.0 | 90.5 | 1.65 | 5.4 |
| Referenc e Example 4 | 295.2 | 251.2 | 85.1 | 3.6 | 461.5 | 405.3 | 89.3 | 1.65 | 4.2 |
| Referenc e Example 5 | 272.6 | 244.0 | 89.5 | 3.6 | 387.0 | 360.3 | 93.1 | 1.65 | 3.6 |
| Referenc e Example 6 | 272.6 | 244.0 | 89.5 | 3.6 | 489.1 | 412.3 | 84.3 | 1.65 | 5.2 |

**[Table 4]**

| | Full Cell Electrochemical Characteristics | | |
|---|---|---|---|
| | N/P Ratio | Energy Density (Wh/L) | Lifespan Characteristics (%) |
| Example 1 | 105 | 813.4 | 97 |
| Example 2 | 105 | 816.2 | 97 |
| Example 3 | 105 | 820.5 | 96 |
| Example 4 | 105 | 830.1 | 96 |
| Comparative Example 1 | 105 | 566.0 | 98 |
| Comparative Example 2 | 105 | 600.2 | 95 |
| Comparative Example 3 | 105 | 706.8 | 93 |
| Comparative Example 4 | 105 | 746.2 | drop |
| Comparative Example 5 | 105 | 686.3 | drop |
| Reference Example 1 | 105 | 772.5 | 93 |
| Reference Example 2 | 105 | 782.1 | 94 |
| Reference Example 3 | 105 | 784.5 | 92 |
| Reference Example 4 | 105 | 788.5 | 91 |
| Reference Example 5 | 105 | 798.3 | drop |
| Reference Example 6 | 105 | 799.1 | drop |

### Experimental Example 1: Evaluation of Positive Electrode Active Material and Positive Electrode Physical Properties

### (1) Evaluation of I(003)/I(104) Peak Intensity Ratio and c-Axis Lattice Constant of Positive Electrode Active Material

The I(003)/I(104) peak intensity ratio and the c-axis lattice constant were evaluated by applying X-ray diffraction (XRD) pattern analysis, peak broadening of XRD data, and the Scherrer equation.

### (2) Evaluation of Average Particle Diameter (D50) of Positive Electrode Active Material

With respect to active material powder, a particle diameter corresponding to 50% of a volume cumulative amount was measured using a laser diffraction method.

### (3) Evaluation of Initial Efficiency of Positive Electrode

Half coin cells were manufactured using the positive electrodes manufactured in the Examples, Comparative Examples, and Reference Examples; an electrolyte solution obtained by adding 1.0 vol% of VC and 0.5 wt% of LiBF₄ based on the total amount of the electrolyte solution to 1 M LiPF₆ in EC:EMC=3:7 (vol%); a PP separator; and a lithium negative electrode (200 µm, Honzo metal).

Thereafter, after aging at 25°C for 12 hours, a charge/discharge test was performed at 45°C. For initial capacity evaluation, 200 mAh/g was used as a reference capacity, and charging was performed to 4.65 V at a constant current of 0.1 C, followed by switching to constant voltage, and charging was continued until the end current reached 0.05 C. After charging, a rest time of 10 minutes was provided, and discharge was performed to 2.5 V at a constant current of 0.1 C based on a reference capacity of 200 mAh/g.

### (4) Evaluation of Positive Electrode Density

After a thickness of the electrode was measured, a volume was obtained and divided by a weight of the mixture, thereby evaluating positive electrode density.

### Experimental Example 2: Evaluation of Negative Electrode Physical Properties

### (1) Evaluation of Initial Efficiency of Negative Electrode

Half coin cells were manufactured using the negative electrodes manufactured in the Examples, Comparative Examples, and Reference Examples; an electrolyte solution obtained by adding 1.0 vol% of VC and 0.5 wt% of LiBF₄ based on the total amount of the electrolyte solution to 1 M LiPF₆ in EC:EMC=3:7 (vol%); a PP separator; and a lithium counter electrode (200 µm, Honzo metal).

Thereafter, after aging at 25°C for 12 hours, a charge/discharge test was performed at 45°C. For initial capacity evaluation, 200 mAh/g was used as a reference capacity, and charging was performed to 4.6 V at a constant current of 0.1 C, followed by switching to constant voltage, and charging was continued until the end current reached 0.005 C. After charging, a rest time of 10 minutes was provided, and discharge was performed to 1.5 V at a constant current of 0.1 C based on a reference capacity of 200 mAh/g.

### (2) Evaluation of Negative Electrode Density

After a thickness of the electrode was measured, a volume was obtained and divided by a weight of the mixture, thereby evaluating negative electrode density.

### Experimental Example 3: Evaluation of Electrochemical Characteristics of Full-Cell Battery

Pouch-type full cells were manufactured using the positive electrodes and negative electrodes manufactured in the Examples, Comparative Examples, and Reference Examples; an electrolyte solution obtained by adding 1.0 vol% of VC and 0.5 wt% of LiBF₄ based on the total amount of the electrolyte solution to 1 M LiPF₆ in EC:EMC=3:7 (vol%); and a PP separator.

### (1) Evaluation of N/P Ratio

The N/P ratio was evaluated by converting the measured cell capacity relative to the total discharge capacity of the negative electrode included in the full cell.

### (2) Evaluation of Energy Density

After manufacturing the full cell, energy density was evaluated by converting an average voltage and capacity and a volume of the battery by reflecting the density of the electrode in which each material was used and the thicknesses of subsidiary materials. Here, the density of the electrode was converted using the weight of the electrode per unit area and the thickness appearing during maximum rolling.

### (3) Evaluation of Lifespan Characteristics

After manufacturing the full cell, at 45°C, charging was performed to 4.6 V at a constant current of 0.5 C, followed by switching to constant voltage, and charging was continued until the end current reached 0.05 C. After charging, a rest time of 10 minutes was provided, and discharge was performed to 2.5 V at a constant current of 0.5 C. Charging and discharging were performed 30 times under such charge/discharge cycle conditions, and a capacity retention rate of the 30th cycle relative to the first cycle was calculated.

Referring to Tables 1 to 4, in the case of Examples 1 to 4, in which the composition of the positive electrode active material, the composition of the negative electrode active material, the difference value in initial efficiency between the positive electrode and the negative electrode, and the like satisfied the ranges according to the present invention, it was confirmed that both energy density and lifespan characteristics of the full cell were implemented very excellently. In addition, it was confirmed that the positive electrode active materials of Examples 1 to 4 had I(003)/I(104) peak intensity ratios obtained to be smaller than those of Comparative Examples 1 to 4, which are conventional positive electrode active material compositions.

In contrast, in the case of Comparative Example 1 using a conventional positive electrode active material having a typical lithium- and manganese-rich composition, and Comparative Examples 2 and 3 using conventional NCM-based lithium metal oxide positive electrode active material compositions, it was confirmed that battery energy density and lifespan characteristics were significantly lower than those of the Examples.

In the case of Comparative Example 4, an excess amount of lithium and Ti, which is a buffer metal element, were introduced, but as a result of introducing too excessive an amount of Ti, it was confirmed that the I(003)/I(104) peak intensity ratio was obtained to be too small, battery energy density was lower than those of the Examples, and in particular, lifespan characteristics were extremely deteriorated to a drop level.

In the case of Comparative Example 5 having a conventional LiNiO₂ composition, it was confirmed that battery energy density was lower than those of the Examples, and in particular, lifespan characteristics were extremely deteriorated to a drop level.

In the case of Reference Examples 1 to 4, although the positive electrode active material and the negative electrode active material themselves were appropriate, the combination thereof was inappropriate, and as a result, the difference in initial efficiency between the positive electrode and the negative electrode became too large. Accordingly, it was confirmed that battery energy density and lifespan characteristics deteriorated compared with the Examples.

In the case of Reference Examples 5 and 6, the mixed weight ratio of silicon oxide and artificial graphite in the negative electrode active material was not appropriately controlled, and as a result, the difference in initial efficiency between the positive electrode and the negative electrode became too large. Accordingly, it was confirmed that battery energy density deteriorated compared with the Examples, and in particular, lifespan characteristics were extremely deteriorated to a drop level.

Although preferred embodiments of the present invention have been described above, the present invention is not limited thereto, and various modifications may be made and practiced within the scope of the claims, the detailed description of the invention, and the accompanying drawings, and such modifications also naturally fall within the scope of the present invention.

Accordingly, the substantial scope of rights of the present invention should be defined by the appended claims and equivalents thereof.

## Claims

1. A lithium secondary battery comprising a positive electrode, a negative electrode, and an electrolyte,
wherein the positive electrode includes a positive electrode active material layer,
wherein the positive electrode active material layer includes a positive electrode active material,
wherein the positive electrode active material includes a lithium metal oxide having a lithium-rich composition represented by the following Chemical Formula 1, and
wherein the negative electrode includes a negative electrode active material layer, and the negative electrode active material layer includes a silicon-based negative electrode active material:
[Chemical Formula 1] Li₁₊ₓ(NiₐM1_{b}M2_{c})₁₋ₓO₂
wherein, in Chemical Formula 1, 0.02≤x≤0.1, 0.75≤a≤0.98, 0.02≤b≤0.25, 0≤c≤0.1, a+b+c=1, M1 is a buffer metal element and is Ti, Nb, W, Zr, V, Cr, Mo, Ta, or a combination thereof, and M2 is a doping element and is Al, B, Y, Co, Mn, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof.

2. The lithium secondary battery of claim 1,
wherein an absolute value of a difference in initial efficiency between the positive electrode and the negative electrode is 3% or less.

3. The lithium secondary battery of claim 1,
wherein the lithium metal oxide has a ratio of a peak intensity of a (003) plane to a peak intensity of a (104) plane (I(003)/I(104)) of 0.7 to 1.6 when analyzed by X-ray diffraction.

4. The lithium secondary battery of claim 1,
wherein the lithium metal oxide has a c-axis lattice constant of 14.23 Å to 14.5 Å.

5. The lithium secondary battery of claim 1,
wherein the positive electrode has an initial efficiency of 80% to 93%.

6. The lithium secondary battery of claim 1,
wherein the silicon-based negative electrode active material is silicon, silicon oxide, a silicon-carbon composite, or a combination thereof.

7. The lithium secondary battery of claim 1,
wherein the negative electrode active material layer further includes a carbon-based negative electrode active material.

8. The lithium secondary battery of claim 7,
wherein the carbon-based negative electrode active material is natural graphite, artificial graphite, or a combination thereof.

9. The lithium secondary battery of claim 7,
wherein the silicon-based negative electrode active material is silicon, silicon oxide, or a combination thereof, and
wherein a weight ratio of the silicon-based negative electrode active material and the carbon-based negative electrode active material (silicon-based negative electrode active material:carbon-based negative electrode active material) is 2:98 to 20:80.

10. The lithium secondary battery of claim 1,
wherein the negative electrode has an initial efficiency of 87% to 92%.

11. The lithium secondary battery of claim 1,
wherein the lithium secondary battery has an N/P ratio of 100% to 130%.

12. The lithium secondary battery of claim 1,
wherein the positive electrode active material has an average particle diameter (D50) of 3 µm to 12 µm.

13. The lithium secondary battery of claim 1,
wherein the positive electrode active material has a BET specific surface area of 1 m²/g to 10 m²/g.

14. The lithium secondary battery of claim 1,
wherein the positive electrode has an electrode density of 3.0 g/cc to 4.0 g/cc.

15. The lithium secondary battery of claim 1,
wherein the silicon-based negative electrode active material has an average particle diameter (D50) of 3 µm to 8 µm.

16. The lithium secondary battery of claim 1,
wherein the negative electrode has an electrode density of 1.5 g/cc to 1.8 g/cc.
